# EUROPEAN PATENT APPLICATION

(11) **EP 0 713 813 A2**
(43) Date of publication of application: **29.05.1996**
(21) Application number: 95308372.2
(22) Date of filing: 22.11.1995
(51) Int. Cl.: B60T 8/50

(54) **Improvements in anti-lock hydraulic braking systems for vehicles**

(30) Priority: 23.11.1994 GB 9423598
(71) Applicant: LUCAS INDUSTRIES PUBLIC LIMITED COMPANY, Solihull, West Midlands B91 3TX (GB)
(72) Inventor: Jones, Michael, Nuneaton, Warwickshire CV11 6JJ (GB)
(74) Representative: Spall, Christopher John

(57) **Abstract**

In an ABS braking system a fluid pressure source comprises an hydraulic accumulator (9) adapted to be charged by a pump (14) by fluid drawn from a reservoir (15), and solenoid-controlled modulator valve assembly (13) comprises a solenoid-controlled dump valve (20) moveable between an open position and a closed position, in combination with a flow control valve (21) including a spool working in a bore and incorporating a flow control orifice. The dump valve (20) is normally closed to define an unrestricted path from the accumulator to a brake (1) through the flow valve under the control of a pedal-operated valve (11) for normal brake application, and moves into the open position during ABS to relieve the brake by directing fluid from the brake back to the reservoir and causing the flow valve spool to move in a direction of low pressure cutting off the normal flow rate. Thereafter the brake is re-applied from the accumulator and through the flow valve at a controlled rate determined by the flow control orifice.

## Description

This invention relates to improvements in anti-lock (ABS) braking systems for vehicles of the kind in which the supply of fluid from a fluid pressure source to a brake on a wheel is modulated in accordance with the behaviour of the braked wheel by solenoid-controlled modulator valve means responsive to signals from an electronic controller which, in turn, receives from a sensor sensing the behaviour of the braked wheel.

In known ABS braking systems, for example forming the subject of our GB A-2 263 955, during ABS fluid dumped from the brake to an expander chamber is pumped back to the fluid source by an ABS motor driven pump in order to make up the volume of fluid necessary to re-apply the brake following wheel recovery, and a feed-back reaction is felt at the foot pedal. In addition a solenoid-controlled by-pass valve located between the fluid source and the brake by-passes the solenoid-controlled valve means. The by-pass valve is movable between a normally open position to provide unrestricted communication between the fluid source and the brake, and a closed position, in response to an ABS signal accompanied by operation of the solenoid-controlled valve means. The by-pass valve then remains closed during a given brake application cycle with the brake being re-applied at a rate determined by the solenoid-controlled modulator valve means.

In an ABS system, such as GB-A-2 263 955, in which fluid is dumped to the expander chamber which includes a piston subjected to a small spring force, upon release the fluid from the brake to the chamber during ABS, the presence of the spring force means that pressure cannot be eliminated from the system. Also, in such an ABS system, in addition to the expense of having to provide the by-pass valve itself, the volumetric flow through it is limited by the size of the orifice available for a given valve.

According to our invention in an ABS braking system of the kind set forth the fluid source comprises an hydraulic accumulator adapted to be charged by a pump by fluid drawn from a reservoir, and the solenoid-controlled valve means comprises a solenoid-controlled dump valve moveable between an open position and a closed position, in combination with a flow control valve including a spool working in a bore and incorporating flow control means, the dump valve being normally closed to define an unrestricted path from the accumulator to the brake through the flow control valve under the control of a pedal-operated valve for normal brake application, and moving into the open position during ABS to relieve the brake by directing fluid from the brake back to the reservoir and causing the flow control valve spool to move in a direction of low pressure cutting off the normal flow rate, the brake thereafter being re-applied from the accumulator and through the flow control valve at a controlled rate determined by the flow control means.

We therefore provide a full power ABS braking system in which the flow control valve can be adapted to increase the volumetric flow through it by increasing the effective size of the orifice, in combination with the dump valve which is operative to dump large volumetric flows back to the reservoir.

By eliminating an expander chamber and returning dumped fluid to the reservoir from which the accumulator is charged enables us to reduce to zero, if required, the pressure in the brake line. Also the omission of a motor-driven brake re-application pump results in relatively silent ABS operation in addition to reducing costs.

We can also utilise a very simple construction of flow valve suited to handling large flows, and in respect of which the flow characteristics, in operation, are substantially smoother due to the higher pressures applied to the valve from the accumulator, and the characteristics exhibited during flow through it.

This simple construction of flow valve represents a considerable cost saving due to a reduced "part" count.

Utilising pressure in the accumulator to provide for normal brake application and re-application during ABS has the further advantage that no pressure feedback is felt at the brake pedal.

In a typical vehicle braking system one hydraulic storage accumulator is conveniently provided for each half system, assuming a front/rear split.

When a brake pedal is operated fluid under pressure from the accumulators is allowed to enter the wheel brakes, and a foot valve operated by the pedal is arranged such that the pressure applied to the brakes is substantially proportional to the force applied to the brake pedal.

During a brake application typically fluid is directed from the foot valve through the solenoid-controlled modulator valve means directly to the brakes on the front wheels, and optionally through a load-apportioning valve to the brakes on the rear wheels.

Conveniently the solenoid-controlled modulator valve means comprises a multi-channel unit, preferably a three-channel unit, each channel containing a solenoid-operated dump valve and a flow control valve.

The successful operation of the ABS depends upon the volume of stored energy in the hydraulic support accumulators of the system. This is chosen to be sufficient to meet current EC regulations concerning energy conservation during both normal braking and ABS operation.

One embodiment of our invention is illustrated in the accompanying drawings:-
**Figure 1** is a layout of a three-channel hydraulic anti-lock (ABS) braking system for a vehicle;
**Figure 2** is a layout illustrating the arrangement of the ABS modulator valve means of Figure 1; and
**Figure 3** is a section on an enlarged scale of one of the modulator valve means of Figure 2.

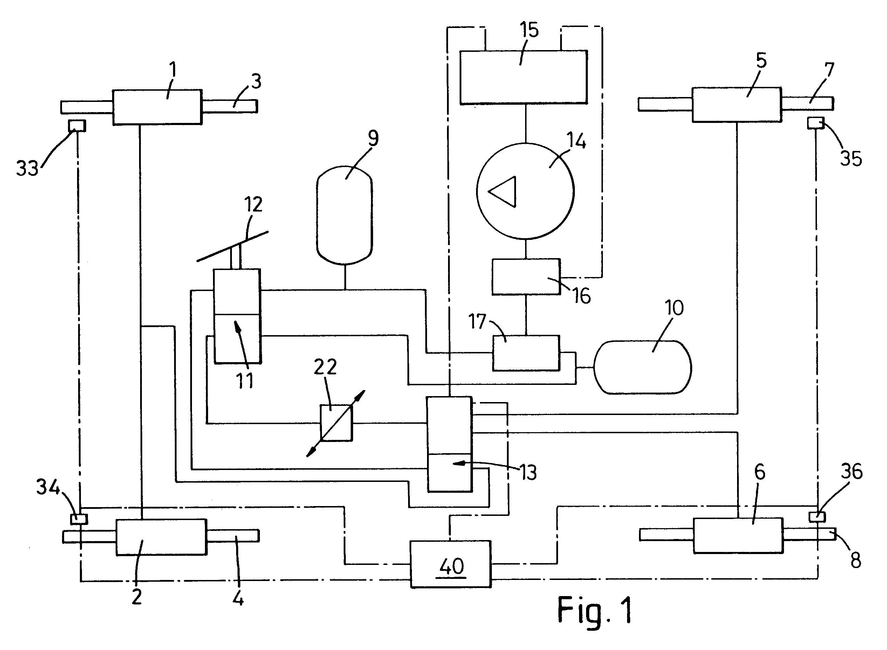

The hydraulic anti-lock braking system illustrated in Figure 1 of the accompanying drawings comprises brakes 1 and 2 on respective front wheels 3 and 4 of the vehicle, and brakes 5 and 6 on respective rear wheels 7 and 8 of the vehicle. The brakes 1 and 2 are applied by fluid under pressure from a front support hydraulic accumulator 9, and the brakes 5 and 6 are applied from a rear support hydraulic accumulator 10.

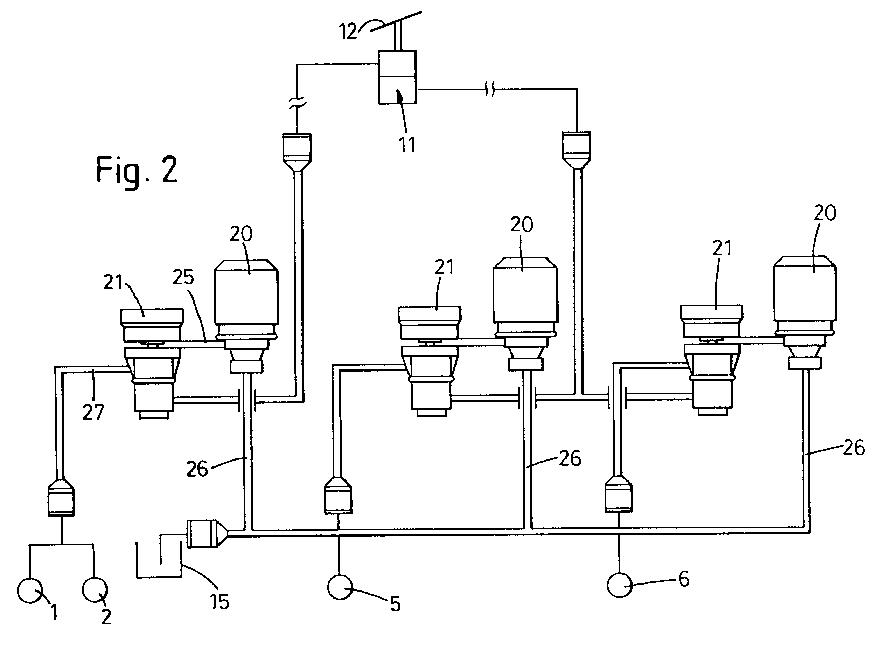

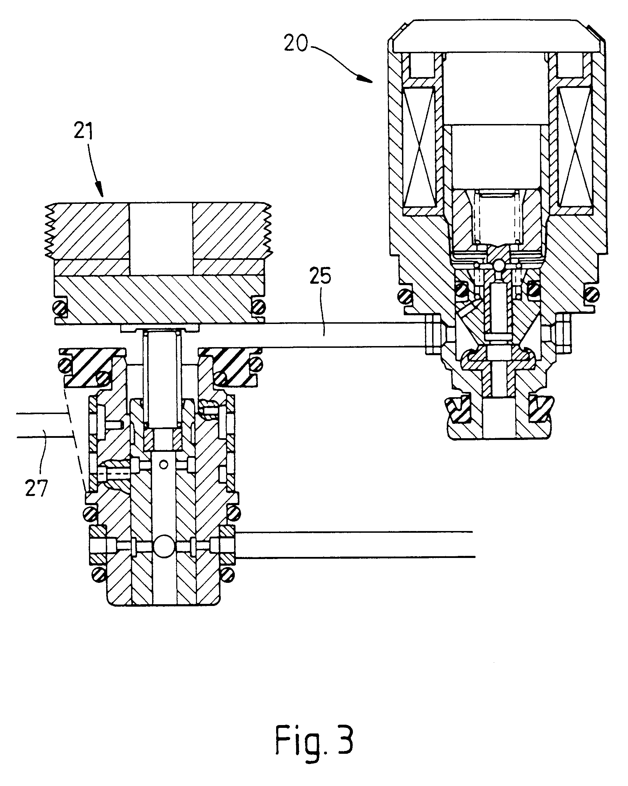

A foot valve 11 adapted to be operated by a pedal 12 controls the supply of fluid from each accumulator 9 and 10 to the respective pairs of front brakes 1 and 2, and rear brakes 5 and 6 through an ABS solenoid controlled modulator valve means 13 of the three channel type and which is illustrated in detail in Figures 2 and 3 of the accompanying drawings.

The two accumulators 9 and 10 are charged by an hydraulic pump 14 which is driven by the engine of the vehicle, or by a separate electric motor. The pump 14 draws fluid from a fluid reservoir 15 and pumps it to both accumulators 9 and 10 through a pump unloader valve 16 and a double check valve 17.

The ABS solenoid-controlled modulator means 13 comprises three pairs of solenoid-operated normally-closed duplex valves 20 in combination with three respective flow control valves 21, and of which one of the duplex valves 20 and one of the flow control valves 21 are illustrated in detail in Figure 3 of the accompanying drawings.

In the braking system of the front/rear split type illustrated one support accumulator is provided for each half of the system. As illustrated fluid from the foot valve 11 is supplied directly to the front brakes 1 and 2 through the modulator 13, and through a load apportioning valve 22, and the modulator 13 to the rear wheel brakes 5 and 6.

Each solenoid-operated valve 20 is normally closed to isolate a dump line 25 from the flow valve 20 from a return line 26 leading back to the reservoir 15. The solenoid-operated valve 20 may conveniently be of the construction forming the subject of our European Patent Application No. 0 403 144.

Each flow valve 21 comprises a spool working in a bore to control communication between the foot valve 11, the dump line 25, and a supply line 27 leading to the brakes. The flow valve 21 may conveniently comprise the flow valve disclosed in WO92/05992 but with the solenoid omitted. As described in that disclosure the spool defines flow control means including a flow control orifice for determining the rate of re-application of the brakes during ABS.

The brakes 1 and 2 are controlled from a common solenoid-operated valve 20 and a flow valve 21. The rear wheel brake 5, and the rear wheel brake 6, are controlled by individual pairs of solenoid-operated valves 20 and flow valves 21.

Each wheel is provided with an individual wheel speed sensor 33, 34, 35 and 36. An electronic control module 40 differentiates signals from the sensors 33, 34, 35 and 36, and emits an appropriate energising current to actuate a respective one or more of the solenoid-operated valves when the nature and duration of such a signal indicates the approach of an ABS condition.

When the pedal 12 is operated fluid under pressure from both accumulators 9 and 10 enters the brakes 1, 2, 5 and 6 by flow through respective flow valves 2 which are open, the solenoid-operated valve 20 being closed to cut off flow to the return lines 26. The foot valve 11 is constructed such that the pressure allowed to flow to the brakes is substantially proportional to the force applied to the brake pedal.

During a normal brake application fluid is directed from the foot valve 11 through the modulator valve 13 directly to the front brakes 1 and 2 and to the rear brakes 5 and 6 through the load apportioning valve 22. During this operation the fluid flows are unrestricted and unimpeded through the flow valves 21.

When the control module 40 recognises a signal from a wheel speed sensor as being indicative of the onset of ABS, an energising current is sent to the solenoid of a respective solenoid-operated valve, say the valve for controlling operation of the brakes 1, and 2, on the front wheels 3 and 4. Energisation of the solenoid causes the valve to move into a position in which a pressure differential is created across the re-application orifice in the spool of the flow valve 21. This, in turn, causes the spool to move in the direction of low pressure cutting off the normal flow route though the flow valve 21 and with the solenoid-operated valve 20 directing fluid from brakes 1 and 2 back to the reservoir by interconnecting the dump line 25 to the return line 26.

When the braked wheel has recovered, the solenoid is de-energised and the brakes are then re-applied at a controlled rate through the orifice in the spool and as described in detail in WO92/05992.

During ABS, since the brake fluid is dumped back to the reservoir 15, the brake pressure can be reduced to zero. This has the advantage that braking performance over surfaces of low co-efficient of friction will be improved.

Since ABS is achieved in a full power braking system by modulating the supply of fluid to the brakes from the downstream side of the foot valve, no pressure feedback or reaction will be felt at the brake pedal and the driver will be substantially unaware that ABS is in fact taking place since the elimination of a normal motor/pump combination results in substantially silent ABS operation.

## Claims

1. An anti-lock (ABS) braking system for vehicles in which the supply of fluid from a fluid pressure source to a brake (1, 2, 5, 6) on a wheel (3, 4, 7, 8) is modulated in accordance with the behaviour of the braked wheel by solenoid-controlled modulator valve means responsive to signals from an electronic controller (40) which, in turn, receives signals from a sensor (33, 34, 35, 36) sensing the behaviour of the braked wheel, characterised in that the fluid source comprises an hydraulic accumulator (9, 10) adapted to be charged by a pump (14) by fluid drawn from a reservoir (15), and the solenoid-controlled valve means comprises a solenoid-controlled dump valve (20) moveable between an open position and a closed position, in combination with a flow control valve (21) including a spool working in a bore and incorporating flow control means, the dump valve (20) being normally closed to define an unrestricted path from the accumulator to the brake through the flow control valve (21) under the control of a pedal-operated valve (11) for normal brake application, and moving into the open position during ABS to relieve the brake by directing fluid from the brake back to the reservoir (15) and causing the flow control valve spool to move in a direction of low pressure cutting off the normal flow rate, the brake thereafter being re-applied from the accumulator and through the flow control valve at a controlled rate determined by the flow control means.

2. A braking system according to Claim 1, in which the flow control means includes a flow control orifice.

3. A braking system according to Claim 1, or Claim 2 in which a brake pedal (12) is operable to allow pressure from the accumulator (9, 10) to enter the wheel brakes, and a foot valve (11) operated by the pedal (12) is arranged such that the pressure applied to the brakes is substantially proportional to the force applied to the brake pedal.

4. A braking system according to any of Claims 1-3, in which the system is of the front/rear split type, and one hydraulic storage accumulator (9, 10) is provided for each half system.

5. A braking system according to Claim 3 or Claim 4, in which fluid is directed from the foot valve (11) through the solenoid-controlled modulator valve means directly to the brakes (1, 2) on the front wheels (3, 4), and to the brakes (5, 6) on the rear wheels (7, 8).

6. A braking system according to Claim 5, in which fluid is supplied to the brake (5, 6) on the rear wheels (7, 8) through a load apportioning valve (22).

7. A braking system according to any preceding Claim, in which the solenoid-controlled modulator valve means comprises a multi-channel unit, each channel containing a solenoid-operated dump valve (20) and a flow control valve (21).

8. A braking system according to Claim 7, in which brakes (1, 2) on the front wheels (3, 4) are controlled from a common solenoid-operated valve (20) and a flow valve (21), and the brakes (5, 6) on the rear wheels (7, 8) are controlled by individual pairs of solenoid-operated valves (20) and flow valves (21).

9. A braking system according to any preceding Claim in which the pump (14) is adapted to pump fluid to the accumulator (9, 10) through a pump unloader (16) and a double check valve (17).
